(19) Europäisches Patentamt / European Patent Office / Office européen des brevets

(11) **EP 3 246 081 A1**

(12) **EUROPEAN PATENT APPLICATION**

(43) Date of publication:
22.11.2017 Bulletin 2017/47

(51) Int Cl.:
**B01D 53/047** (2006.01)

(21) Application number: 17171035.3

(22) Date of filing: 15.05.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 19.05.2016 DK 201670332

(71) Applicant: **P.L. Mouritsen Holding ApS**
**7120 Vejle Ø (DK)**

(72) Inventor: **Bæk, Martin**
**8660 Skanderborg (DK)**

(74) Representative: **Olesen, Birthe Bjerregaard et al**
**Patrade A/S**
**Fredens Torv 3A**
**8000 Aarhus C (DK)**

(54) **NITROGEN GENERATOR SYSTEM**

(57) The present invention relates to a nitrogen generator system comprising at least an atmospheric air compressor having an air intake and connection means for connecting to a nitrogen generator of the membrane type, where the nitrogen generator system preferably also comprises an air receiver and an air purifier. The new and inventive of the nitro generator system is that the nitrogen generator system comprises at least one mobile unit, where the at least one mobile unit comprises connection means for connecting at least one air connection, where the at least one air connection provides compressed air from the air compressor and to the nitrogen generator, where the nitrogen generator is arranged in such a mobile unit, where said mobile unit further is constructed according to European standards for transport, handling and use of material offshore in hazardous areas, and where the capacity of the nitrogen generator is above 350 normal cubic metres per hour (Nm3/h), and preferable even above 500 Nm3/h, where the delivery pressure of the generated nitrogen is above 8 bar or even above 9 bar, and where the purity of the generated nitrogen is above 95 %, and preferably above 98 %.

Fig. 2

**EP 3 246 081 A1**

## Description

### Field of the Invention

The present invention relates to a nitrogen generator system comprising at least an atmospheric air compressor having an air intake and connection means for connecting to a nitrogen generator of the Pressure Swing Adsorption (PSA) type, where the nitrogen generator system preferably also comprises an air receiver and an air purifier.

The invention further relates to a use of such a nitrogen generator system, and further the invention also relates to a method for supplying nitrogen to an offshore or onshore installation for various tasks and a method for controlling and monitoring the progress of processes using generated nitrogen.

### Background of the Invention

It is well known to use quite large amounts of nitrogen for several specific purposes on offshore installations in the oil and gas industry. The nitrogen may e.g. be used to displace hydrocarbons from a subsea pipeline or from a tank system offshore or onshore. Nitrogen may also be used for other purposes, not mentioned here, in the oil and gas industry, which will be clear to the skilled person.

Until now it has been common to operate according to the following procedure:

- ordering a sufficient number of nitrogen bottles arranged in racks from an offshore facility,
- onshore ordering,
- transport from supplier to warehouse,
- handling at the warehouse,
- transport to harbour,
- loading onto a ship,
- unloading from ship to offshore facility,
- storing at offshore facility before use,
- handling at offshore facility during operation/use,
- storing at offshore facility after use,
- loading back to ship,
- unloading ship at harbour, and
- transport to warehouse, handling or return to supplier.

More or less processes may be involved, but this makes it clear that a number of logistic problems need to be handled in order to provide an offshore facility with nitrogen bottles in racks. Each nitrogen rack comprises 64 pressure bottles, each containing 50 litres and a pressure of 280 bars. One rack of nitrogen comprises approximately 800 normal cubic metres (Nm3) of nitrogen.

In order to be able to perform a certain operation, there is a need for having "enough" nitrogen as unexpected things may happen that require a larger amount of nitrogen as initially expected. It is thus standard procedure to order larger quantities than needed to be sure that the job can be finished without running low on, or worse, out of nitrogen. Lack of racks with nitrogen has been known to cause production stop of certain processes which may be quite expensive. Sometimes a production stop due to lack of nitrogen means that the complete process will have to be performed all over again which is time consuming and expensive.

Unused racks or bottles still containing nitrogen will be returned together with empty racks/bottles, and unfortunately you will not get your money back for unused racks/bottles as the supplier cannot guarantee the quality of the content of these racks/bottles.

The racks comprising nitrogen bottles have at least one other disadvantage, as the valves and pipe connections of a rack or bottle may freeze as a consequence of the bottles being emptied quickly. This natural physical phenomenon causes the process to take longer time as the nitrogen simply cannot be fed to the process at a higher speed. It is of course possible to connect several racks of nitrogen in parallel in order to be able to feed more nitrogen into the process. However, this takes up space and is, in many cases, not applicable.

Further, using such racks at an offshore facility raises certain demands for space which often is a problem offshore. The space on an offshore facility is limited and the environment is often harsh and difficult to work in, which in turn makes the use of such racks and bottles rather demanding.

### Object of the Invention

It is an object of the invention to provide a nitrogen generator system, where the system may provide a sufficient quantity of nitrogen generated on-site from atmospheric air.

It is a further object to provide a method for controlling and monitoring the progress of the processes using the generated nitrogen.

**Description of the Invention**

As mentioned above, the invention relates to a nitrogen generator system comprising at least an atmospheric air compressor having an air intake and connection means for connecting to a nitrogen generator of the PSA type, where the nitrogen generator system preferably also comprises an air receiver and an air purifier.

The new and inventive features of the nitrogen generator system is that the nitrogen generator system comprises at least one mobile unit, where the at least one mobile unit comprises connection means for connecting at least one air connection, where the at least one air connection provides compressed air from the air compressor and to the nitrogen generator, where the nitrogen generator is arranged in such a mobile unit, where said mobile unit further is constructed according to European standards for transport, handling and use of material offshore in hazardous areas (DNV 2.7-1 and ATEX directive 94/9/EC), and where the capacity of the nitrogen generator is above 350 normal cubic metres per hour (Nm3/h), and preferable even above 500 Nm3/h, where the delivery pressure of the generated nitrogen is above 8 bar or even above 9 bar, and where the purity of the generated nitrogen is above 95%, and preferably above 98%.

The capacity of a nitrogen generator system may, as already mentioned, be expressed in normal cubic metres per hour (Nm3/h). With reference to the above text about the nitrogen content in pressure bottles in a rack where one rack comprises approximately 800 Nm3, it is easily seen that the difference of using bottled nitrogen in racks and a nitrogen generator system according to the invention can also be illustrated as follows:

A rack comprising 64 pressure bottles, where the rack contains approximately 800 Nm3 can be emptied in approximately two hours. A system according to the invention can produce 500 Nm3/h. In the example below a specific amount of two times 10000 Nm3 nitrogen is needed for a purging/flushing job.

$$\text{Racks: 2 x 10000 Nm3 / 800 Nm3 = 25 racks -> 25 x 2 h = 50 hours}$$

$$\text{Nitrogen generator: 2 x 10000 Nm3 / 500 Nm3/h = 40 hours}$$

As it can be seen the difference in the example is 10 hours, but that is when taking only the time where the nitrogen is flowing from the racks in consideration. There will however be spent a rather large period of time on handling, disconnecting and connecting the racks, and of course there will be spent time on logistics and transport as well. The time savings are very important and so is the much higher safety level as no handing of racks is needed.

Further any unused amount of nitrogen in the racks is worth nothing e.g. the amount of nitrogen in the racks having a lower pressure than the pressure needed for the job. If there is a demand for a pressure of 2 bars there will of course remain a pressure of 2 bars in the pressure bottles in the racks, which is not the situation using a nitrogen generator system according to the invention.

The capacity of the nitrogen generator system is dependent on the demand for purity. Using a nitrogen generator system according to the invention, it is for example possible to produce:

350 Nm3/h at 9 bar having a purity of 99.9 % nitrogen,
500 Nm3/h at 9 bar having a purity of 98.0 % nitrogen,
650 Nm3/h at 9 bar having a purity of 95.0 % nitrogen.

The term "purity" as used above is actually the percentage of pure nitrogen in the processed atmospheric air after it has been processed in the nitrogen generator system.

The remaining e.g. 2 % to 5 % comprises a compilation of the gasses found in atmospheric air. Such small amounts of "not-nitrogen" in the produced nitrogen are of no importance for the proposed use.

The mentioned mobile unit for producing nitrogen may be capable of producing nitrogen as a displacement gas having a pressure of 8 to 9 bar and with a flow of 350 Nm3/h to 500 Nm3/h, or even more. This possibility of having a high and continuous flow of nitrogen will make the processes, such as pressure testing, pigging, purging, preservation, packing of pipelines, inerting or leak seeking, much faster and also cheaper. This is mainly possible due to the rather high pressure and flowrate that are available when using a nitrogen generator system according to the invention.

In the following, the terms used above is explained shortly.

Pressure test: By use of nitrogen, the application (pipeline, tank, part of process equipment) is pressurized to the test-pressure according to a test procedure. The pressure is kept for a period and monitored and logged.

Pigging: Driving a pig (vessel) through a pipeline. This is used when a media (gas or liquid) is to be filled in or emptied from a pipeline. Nitrogen is used to forward the pig and to avoid mixtures of air and combustible gasses or liquids.

Purging: Flushing an application. (Pipeline, tank, part of process equipment). Nitrogen is used to displace eventually combustible gasses before repair or inspection.

Preservation: Filling an application (pipeline, tank, part of process equipment) with nitrogen to eliminate corrosion.

Packing of pipelines: Filling an application (pipeline, tank, part of process equipment) with nitrogen to a defined pressure to avoid penetration of unwanted medias from surrounding applications.

Inerting: By adding nitrogen to a process- or storage tank containing combustible liquid, air (oxygen) is displaced.

Leak seeking: By pressurizing an application (pipeline, tank, part of process equipment) nitrogen can be used as a tracer to spot eventually leeks. Helium can be added to increase efficiency.

The mobile unit may be an "add on unit" to permanent or mobile units such as a compressor. The main purpose with the system according to the invention is to obtain an on demand production of nitrogen. By producing nitrogen onsite and on demand there is no need for using racks with pressure bottles, and thus all the logistic and administrative problems with racks and bottles mentioned above become irrelevant. As well offshore as onshore installations of the types mentioned normally have a suitable air compressor that can easily be connected to a mobile nitrogen generator unit. This gives the benefit of not needing to handle and store the mentioned racks of nitrogen bottles at a rather narrow working area where deck space always is limited. As the compressor already is present it is only the footprint of the mobile unit of the nitrogen generator that is added to the installation. No crane handling of racks to and from the place of use or to and from a supply ship is needed which, in turn, also saves time and costs and not least also eliminates rather dangerous operations for the personnel performing this job.

The mobile unit is enclosed in a standard 8-10 feet container, i.e. having a footprint of 2.1 x 2.4 m. Thus, the mobile unit is very compact and provides a very flexible use. Thus, the mobile unit is easily used together with other units, e.g. compressors that are already present at the site and/or compressor units, air purifiers/dehumidifiers, etc. specially adapted for use with the mobile unit.

Furthermore, there is a rather large gain related to safety issues as no use or exchange of racks comprising pressure bottles having an internal pressure of up to 280 bars is needed when using a nitrogen generator system according to the invention.

The mobile unit may advantageously be fabricated according to relevant standards such as DNV 2.7-1, which is a standard for offshore containers, and according to ATEX directive 94/9/EC, which is a directive on equipment and protective systems intended for use in potentially explosive atmospheres. The directive applies to electrical and/or mechanical equipment used on the surface, below the ground and on fixed offshore installations. Specifically, the directive covers:

- All equipment intended for use in potentially explosive atmospheres and which are capable of causing an explosion through their own potential sources of ignition.
- Protective systems intended for use in potentially explosive atmospheres. Protective systems are defined as units which are intended to halt incipient explosions immediately and/or to limit the effective range of explosion flames and explosion pressures.
- Components, which are defined as any item essential to the safe functioning of equipment and protective systems but with no autonomous function.

A nitrogen generator system according to the invention comprises at least one mobile unit. This at least one mobile unit may be manufactured according to the mentioned standard and/or directive.

Atmospheric air used for generating nitrogen according to the invention comprises approximately 21 % to 22 % oxygen and after generation - or extraction - of nitrogen the "exhaust air" contains approximately 30 % to 36 % oxygen. The exhaust air may be added a certain amount of ambient atmospheric air in order to lower the oxygen content before letting the more oxygen rich air out into the ambient area of the nitrogen generator system. This might be preferred in order to lower the risk of any unwanted concentration of oxygen and to lower the risk of a gas explosion.

In an embodiment of a nitrogen generator system according to the invention the nitrogen generator system may comprise an air purity sensor, where said sensor is arranged at the air intake of the air compressor. Such a sensor may be suitable for sensing at least one or more of the following: water content, hydrocarbons (oil and gas of different unwanted types), dust, pollen or salt content in the intake air. All in order to be able to monitor and/or log the physical data of the intake air, as a precaution. If a certain content of an unwanted media is sensed in the intake air, the process of generating nitrogen may be shut down or the flow of air may be directed away from the nitrogen generator by opening a bypass valve or the like. All this is done in order to secure as clean and pure nitrogen as possible, which in turn makes it easier to calculate the length of a certain process.

Oxygen sensors are preferably provided in the surroundings around the mobile unit to detect high levels of oxygen. If high levels of oxygen is detected in the surrounding air, there may be an increased risk of explosion. Thus, signals from the oxygen sensor may be used to shut down the nitrogen production in the mobile unit if the oxygen level rises to a high level in the surrounding air.

Similarly, for safety reasons, a nitrogen detector and/or oxygen may be applied inside the mobile unit. In case of low levels of oxygen detected by the oxygen detector or a corresponding high level of nitrogen, there is a risk for personnel to enter the mobile unit. The high level of Nitrogen may e.g. be the result of a leak in the system inside the mobile unit. Thus, the control unit may cause an alarm, or potentially also shut down the mobile unit if the nitrogen content in the air rises to a high level inside the mobile unit.

In another embodiment of a nitrogen generator system according to the invention, said nitrogen generator system may comprise measuring means for determination of the absolute content of nitrogen in a certain space or volume, e.g. a subsea pipe line, connected to the nitrogen generator system. Measurement of flow, pressure and purity during nitrogen production allows for knowledge of the absolute content of nitrogen and/or hydrocarbons in e.g. a pipeline or a tank system, where the nitrogen is supplied to. In general there is a need to minimise the oxygen content to less than 2% before performing e.g. welding jobs on a pipeline or tank system. Oxygen and e.g. hydrocarbons may be displaced from a pipeline or tank system by adding nitrogen. The volume of a pipeline may be known and the nitrogen then has to be added until a certain content of the gas in the pipeline is nitrogen. By measuring the pressure and temperature of the gas in the system, and by calculating the purity of the nitrogen into the equation, it is possible to determine when the process can be terminated and e.g. a welding job can start. This measuring equipment may be arranged in several positions at the system that is worked upon. There may for instance be one sensor or set of measuring means, but there might also be several sensors or sets of measuring means making it possible to follow the propagation of nitrogen along e.g. a pipeline.

In yet another embodiment of a nitrogen generator system according to the invention, said nitrogen generator system may comprise logging means for logging the absolute content of nitrogen in a certain volume, e.g. a subsea pipe line, connected to the nitrogen generator system. Logging of flow, pressure and purity during nitrogen production and also during a specific process allows for knowledge of the absolute content of nitrogen in e.g. a pipeline or a tank system. Furthermore, such a log may be used as documentation for specific nitrogen content in a specific system, which e.g. is preserved and left unused for a period of time.

Further, a nitrogen generator system according to the invention may comprise inlet means for applying an amount of helium to the generated nitrogen. By applying helium, or another traceable inert gas, it becomes possible to detect leakages using standard leak seeking equipment also called a sniffer. By using helium it is possible to detect even very small leakages, as the size of the molecules is very small which will allow the helium molecules to escape if there is a leak. Helium is also rather easy to detect as the content of helium in the atmospheric air is very small.

A nitrogen generator system according to the invention may comprise nitrogen measuring means for determination of the purity of the generated nitrogen. Such measuring means may be analogue or digitally measuring means, and there may also be established logging means for logging the values measures. Analogue measuring means will typically be of the type that is read manually, and the digitally type may be of the type that can be read as well as controlled in one or more control centres at a distance.

In a preferred embodiment of a nitrogen generator system according to the invention, said nitrogen generator system may comprise calibration means for on-site calibration of the purity of the generated nitrogen, where said calibration means comprises a reference container, such as a pressure bottle, containing nitrogen with a specific purity, e.g. a purity of 99,99 %. Leading nitrogen from the calibration means through the measuring means and adjusting these means according to the purity value of the calibration gas makes a robust and intermediate calibration possible. There might, however, still be a need for a more specific calibration at regular intervals which typically has to be performed at a calibration laboratory. The intermediate calibration may be activated at the measuring means or from a control centre.

A nitrogen generator system according to the invention may also comprise connection means for a direct or at least an indirect connection to a pressure booster, where the pressure booster has the capacity of a pressure above 200 bars, preferably between 200 and 300 bars, and a flow above 100 m3/h, preferably of up to 150 m3/h. A pressure booster may be used for specific purposes where a higher pressure is needed which e.g. might be for filling pressure bottles. Such pressure bottles may be single bottles or bottles arranged in a rack. By filling a small number of bottles, it is possible to use nitrogen in e.g. another area of an offshore installation without installation of pressure lines from the nitrogen generator system to the specific place of use. This might of course only be cost efficient for smaller jobs where only a smaller amount of nitrogen is needed. Generated nitrogen having a pressure of up to 200 to 300 bars may also be used for specific high pressure tests.

In an embodiment of a nitrogen generator system according to the invention, said nitrogen generator system may comprise connection means for connection via the Internet from the nitrogen generator system to a control centre, e.g. offshore or onshore. Such a connection may be a local area network (LAN) or a wireless local area network (WLAN) or a combination thereof. The input to such a control centre may of course come from the nitrogen generator system, but also from a number of sensors and measuring equipment at the installation to which nitrogen is supplied. This can for instance be sensors arranged at the far end of a subsea pipeline that indicates that a sufficient content of nitrogen is present, meaning that hydrocarbons or other media is displaced from the pipeline and that the process of supplying nitrogen can be terminated. Such a system might be fully automatic and operable from a control panel at a control centre, but in case of fault in the automatic control system, a redundant but manual operating system may be present also.

The invention further relates to the use of a nitrogen generator system as mentioned and described above, where the use may comprise generating and supplying a displacement gas into a space or volume in order to displace an unwanted atmosphere in said space or volume, e.g. in a subsea pipe line or in a tank system for displacing hydrocarbons.

The invention also relates to the use of a nitrogen generator system where the use may comprise adding a tracing gas to the generated nitrogen, where said tracing gas is an inert gas, e.g. helium, for tracing possible leaks. Helium is an inert gas and, as such, a fire-retardant gas and is thus preferred over other tracing gasses, such as hydrogen which is highly flammable. Helium has light and small molecules and will escape through even very small leaks which can be detected using standard equipment known as a sniffer.

### Description of the Drawing

An embodiment of the invention will now be described, by way of example only, with reference to the accompanying drawings, in which:

Fig. 1      shows a nitrogen rack comprising 64 pressure bottles of nitrogen,
Fig. 2      shows a nitrogen generator system,
Fig. 3      shows a nitrogen generator unit seen from an end,
Fig. 4      shows a nitrogen generator unit seen from a side,
Fig. 5      shows a diagram illustrating how a nitrogen generator system is controlled.

In the following text, the figures will be described one by one and the different parts and positions seen in the figures will be numbered with the same numbers in the different figures. Not all parts and positions indicated in a specific figure will necessarily be discussed together with that figure.

### Position number list

1. Rack
2. Nitrogen bottle
3. Nitrogen generator system
4. Compressor
5. Air receiver
6. Air purifier
7. Nitrogen generator unit
8. High pressure booster pump
9. Process
10. Offshore container
11. Door in offshore container
12. Connecting means for air input and nitrogen output.
13. Internet
14. Local area network - LAN
15. Connection between Internet and LAN
16. Control centre, offshore
17. Control centre, onshore
18. Hosted web based control platform
19. PLC at the nitrogen generator unit
20. External measuring point, pressure
21. External measuring point, purity
22. External measuring point, hydrocarbon content

**Detailed Description of the Invention**

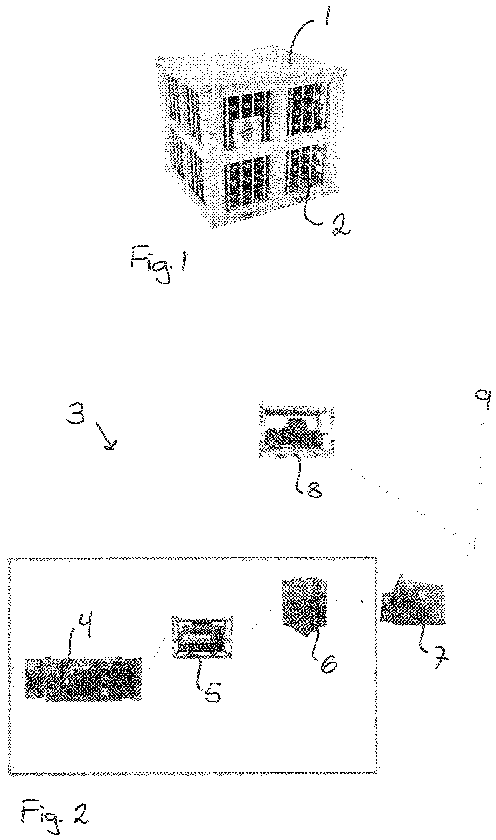

Fig. 1 shows the prior art as used so far for tasks where a rather large amount of nitrogen is needed in a relatively short period of time. Today, nitrogen for the above-mentioned tasks is supplied in racks 1 comprising high pressure bottles 2. One rack 1 will typically contain 64 bottles 2 each comprising 50 litres at 280 bars. Such racks 1 will be ordered and handled in a large number and will thus take up a rather large amount of space as well as they will be time consuming to handle.

Fig. 2 shows a nitrogen generator system 3 to be used e.g. at an offshore installation. In the box, a compressor 4, an air receiver 5, and an air purifier 6 are seen, which typically already will be present at the offshore installation for other purposes than generating nitrogen. These units 4, 5, 6 can now be used together with an add-on nitrogen generator unit 7. The nitrogen generator unit 7 may supply nitrogen to a high pressure booster pump, but normally the generated nitrogen will be supplied directly to the process 9, where it is to be used.

Here, the nitrogen generator unit 7 is a mobile unit, but it can also be a more permanent unit which might be built into other existing equipment or compartments.

A nitrogen generator system 1 will typically be used for tasks at an offshore installation when a relatively high volume of nitrogen is required. Such tasks can e.g. be: pressure testing, pigging, purging, preservation, packing of pipelines, inerting, leak seeking, etc. A nitrogen generator unit 7 as described here is capable of continuously producing 500 Nm3/h of nitrogen at 8 to 9 bars having a purity of 98 %.

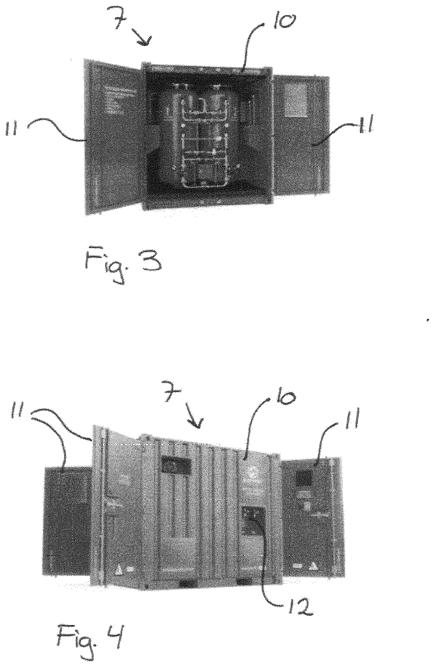

Fig. 3 shows a mobile nitrogen generator unit 7 that can be used for producing nitrogen at a high level of purity, from compressed, oil- and water free air. The nitrogen generator unit 7 is designed to comply with European standards for transport, handling and, according to a directive, for use of offshore material in hazardous areas (DNV 2.7-1 AND ATEX directive 94/9/EC). The nitrogen generator unit 7 consists in general terms of a nitrogen generator built into an offshore container 10, where the unit further complies with the ATEX directive. Here, it is seen from one end and with the doors 11 open.

In fig. 4, the same unit as in fig. 3 is seen, but from another angle. Here, the unit is seen from the side and still with the doors 11 open in both ends. In this figure, the connection means 12 for air input and nitrogen output is seen in a recess on the side of the nitrogen generator unit 7. Further, the nitrogen generator unit 7 can have an outlet inside the unit to connect an external high pressure booster pump 8 for purposes when high pressure is needed.

The design makes the nitrogen generator unit mobile and approved for offshore transportation and approved for use in hazardous areas.

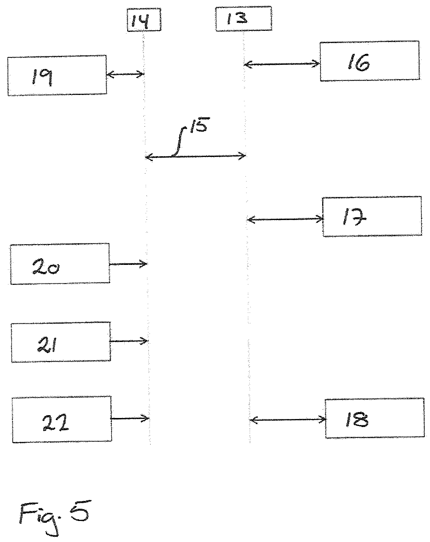

Fig. 5 shows a diagram illustrating how a nitrogen generator system 1 is controlled using the Internet 13 and a local area network (LAN) 14. The LAN 14 and the Internet 13 is connected via a connection 15. An offshore control centre 16, an onshore control centre 17 and/or a hosted web based control platform 18 can be connected to the LAN 14. This way the nitrogen generator unit 7 can be controlled via a PLC 19. Further, the LAN 14 comprises external measuring points 20, 21, 22. Here, it is shown as external measuring points for measuring pressure 20, purity 21 and the content of hydrocarbons 22. Other things could of course be measured if found appropriate.

The external measuring points 20, 21, 22 may also comprise means for wireless communication via a wireless local area network (WLAN) or the external measuring points 20, 21, 22 may be connected via the Internet 13 instead of via LAN 14 or WLAN.

The PLC 19 at the nitrogen generator unit 7 comprises means for logging flow, pressure and purity from the outlet 12 of the nitrogen generator unit 7. The values are to be measured and logged in the control PLC 19 to ensure that the quality of the generated nitrogen for a certain time span is within predefined limits.

The possibility to communicate to and from several external measuring points 20, 21, 22 (pressure, purity, hydro carbon content, etc.) by connecting to the installations LAN gives the operators a very good possibility to control and monitor the complete process while generating nitrogen. Especially if the process is to displace hydrocarbons from a subsea pipeline, there is a huge advantage in having the possibility to monitor external measuring points 20, 21, 22, which may be several kilometres away from the nitrogen generator unit 7.

Further, the nitrogen generator unit 7 can be monitored for maintenance purposes and service support. By help of an Internet based and hosted control platform 18, it is possible to program several software tools used for different purposes depending on the task the generated nitrogen is used for.

The invention is not limited to the embodiments described herein and may be modified or adapted without departing from the scope of the present invention as described in the patent claims below.

**Claims**

1.   A nitrogen generator system comprising at least an atmospheric air compressor having an air intake and connection means for connecting to a nitrogen generator of the Pressure Swing Adsorption (PSA) type, where the nitrogen generator system preferably also comprises an air receiver and an air purifier, **characterised in that** the nitrogen generator system comprises at least one mobile unit, where the at least one mobile unit comprises connection means for connecting at least one air connection, where the at least one air connection provides compressed air from the air compressor and to the nitrogen generator, where the nitrogen generator is arranged in such a mobile unit, where said mobile unit is further constructed according to European standards for transport, handling and use of material offshore in hazardous areas, and where the capacity of the nitrogen generator is above 350 normal cubic metres per hour (Nm3/h), and preferable even above 500 Nm3/h, where the delivery pressure of the generated nitrogen is above 8 bar or even above 9 bar, and where the purity of the generated nitrogen is above 95 %, and preferably above 98 %.

2.  A nitrogen generator system according to claim 1, **characterised in that** said nitrogen generator system comprises an air purity sensor, where said sensor is arranged at the air intake of the air compressor.

3.  A nitrogen generator system according to any of the claims 1 and 2, **characterised in that** said nitrogen generator system comprises measuring means for determination of the absolute content of nitrogen in a certain space or volume, e.g. a subsea pipe line, connected to the nitrogen generator system.

4.  A nitrogen generator system according to claim 3, **characterised in that** said nitrogen generator system comprises logging means for logging the absolute content of nitrogen in a certain volume, e.g. a subsea pipe line, connected to the nitrogen generator system.

5.  A nitrogen generator system according to any of the claims 1 to 4, **characterised in that** said nitrogen generator system comprises inlet means for applying an amount of helium to the generated nitrogen.

6.  A nitrogen generator system according to any of the claims 1 to 5, **characterised in that** said nitrogen generator system comprises nitrogen measuring means for determination of the purity of the generated nitrogen.

7.  A nitrogen generator system according to claim 6, **characterised in that** said nitrogen generator system comprises calibration means for on-site calibration of the purity of the generated nitrogen, where said calibration means comprises a reference container, such as a pressure bottle, containing nitrogen with a specific purity, e.g. a purity of 99,99 %.

8.  A nitrogen generator system according to any of the preceding claims 1 to 7, **characterised in that** said nitrogen generator system comprises connection means for a direct or at least an indirect connection to a pressure booster, where the pressure booster has the capacity of a pressure above 200 bar, preferably between 200 and 300 bar, and a flow above 100 m3/h, preferably of up to 150 m3/h.

9.  A nitrogen generator system according to any of the preceding claims 1 to 8, **characterised in that** said nitrogen generator system comprises connection means for connection via the Internet from the nitrogen generator system to a control centre, e.g. offshore or onshore.

10. Use of a nitrogen generator system according to claim 1, **characterised in that** the use comprises generating and supplying a displacement gas into a space or volume in order to displace an unwanted atmosphere in said space or volume, e.g. in a subsea pipe line or in a tank system for displacing hydrocarbons.

11. Use of a nitrogen generator system according to claim 10, **characterised in that** the use comprises adding a tracing gas to the generated nitrogen, where said tracing gas is an inert gas, e.g. helium, for tracing possible leaks.

Fig. 1

Fig. 2

Fig. 3

Fig. 4

Fig. 5

Europäisches
Patentamt

European
Patent Office

Office européen
des brevets

# EUROPEAN SEARCH REPORT

Application Number

EP 17 17 1035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/333571 A1 (SUNDARAM NARASIMHAN [US] ET AL) 19 December 2013 (2013-12-19) | 1,2,5-9 | INV. B01D53/047 |
| Y | * paragraphs [0004] - [0006], [0026], [0036], [0050], [0054], [0064], [0089]; figures 9-12 * | 3,4,10, 11 | |
| X | US 4 373 938 A (MCCOMBS NORMAN R) 15 February 1983 (1983-02-15) | 1,2,5-9 | |
| Y | * column 1, line 32 - column 1, line 63; claim 1 * | 3,4,10, 11 | |
| Y | US 2006/278359 A1 (WHEATON TERRY [CA] ET AL) 14 December 2006 (2006-12-14) * paragraphs [0003] - [0006], [0030], [0178], [0179], [0186], [0188], [0190], [0220], [0223] * | 3,4,10, 11 | |
| Y | US 5 703 281 A (MYNENI GANAPATI RAO [US]) 30 December 1997 (1997-12-30) * claim 1 * | 11 | |
| Y | DE 198 13 432 A1 (STETTER MICHAEL [DE]; SCHROFF GERHART [DE]) 30 September 1999 (1999-09-30) * claims 1,4 * | 11 | TECHNICAL FIELDS SEARCHED (IPC)  B01D |
| A | US 4 561 865 A (MCCOMBS NORMAN R [US] ET AL) 31 December 1985 (1985-12-31) * column 1, line 6 - column 1, line 15 * * column 1, line 28 - column 1, line 32 * | 1,10 | |

The present search report has been drawn up for all claims

| Place of search | Date of completion of the search | Examiner |
|---|---|---|
| Munich | 10 October 2017 | de Biasio, Arnaldo |

## ANNEX TO THE EUROPEAN SEARCH REPORT
## ON EUROPEAN PATENT APPLICATION NO.

EP 17 17 1035

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2017

| Patent document cited in search report | | Publication date | Patent family member(s) | | | Publication date |
|---|---|---|---|---|---|---|
| US 2013333571 | A1 | 19-12-2013 | AU | 2012223486 | A1 | 15-08-2013 |
| | | | BR | 112013017622 | A2 | 11-10-2016 |
| | | | CA | 2824162 | A1 | 07-09-2012 |
| | | | EA | 201391249 | A1 | 28-02-2014 |
| | | | EP | 2680948 | A2 | 08-01-2014 |
| | | | US | 2013333571 | A1 | 19-12-2013 |
| | | | WO | 2012118759 | A2 | 07-09-2012 |
| US 4373938 | A | 15-02-1983 | NONE | | | |
| US 2006278359 | A1 | 14-12-2006 | US | 2006230935 | A1 | 19-10-2006 |
| | | | US | 2006278359 | A1 | 14-12-2006 |
| | | | WO | 2008003065 | A2 | 03-01-2008 |
| US 5703281 | A | 30-12-1997 | NONE | | | |
| DE 19813432 | A1 | 30-09-1999 | NONE | | | |
| US 4561865 | A | 31-12-1985 | CA | 1239594 | A1 | 26-07-1988 |
| | | | CH | 673233 | A5 | 28-02-1990 |
| | | | DE | 3432896 | A1 | 09-05-1985 |
| | | | ES | 8603279 | A1 | 16-04-1986 |
| | | | ES | 8607040 | A1 | 01-11-1986 |
| | | | GB | 2148737 | A | 05-06-1985 |
| | | | IN | 162515 | B | 04-06-1988 |
| | | | JP | S60110318 | A | 15-06-1985 |
| | | | US | 4561865 | A | 31-12-1985 |

EPO FORM P0459

For more details about this annex : see Official Journal of the European Patent Office, No. 12/82